Europäisches Patentamt

European Patent Office

Office européen des brevets

(19)

(11) Publication number: **0 032 582**
**B1**

(12) **EUROPEAN PATENT SPECIFICATION**

(45) Date of publication of patent specification: **28.05.86**

(21) Application number: **80108138.1**

(22) Date of filing: **22.12.80**

(51) Int. Cl.⁴: **C 08 J 9/22**

(54) **Expanded shaped articles of a heat resistant synthetic resin.**

(30) Priority: **26.12.79 JP 173719/79**

(43) Date of publication of application:
**29.07.81 Bulletin 81/30**

(45) Publication of the grant of the patent:
**28.05.86 Bulletin 86/22**

(84) Designated Contracting States:
**BE DE FR GB**

(56) References cited:
**GB-A-1 198 407**
**GB-A-1 469 278**
**US-A-3 015 851**
**US-A-4 065 411**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Nakagawa, Masao**
**442-21, Sone-cho**
**Takasago-shi Hyogo-ken (JP)**
Inventor: **Nishida, Tatehiko**
**269-14, Tai Aboshi-ku**
**Himeji-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

**Description**

The present invention relates to expanded shaped articles of a heat resistant synthetic resin.

As expanded shaped articles of a synthetic resin, polystyrene expanded shaped articles are well-known in the art. It is already known to produce polystyrene expanded shaped articles by pre-expanding styrene polymer particles containing a volatile foaming agent by heating with steam to prepare pre-expanded particles, then heating with steam the pre-expanded particles in a closed mold permitting the escape of gases, or otherwise by extrusion foaming styrene polymer particles or expandable styrene polymer particles.

Expanded shaped articles made from tertiary-butyl styrene are known from US—A—4 065 411. The foaming agent is e.g. n-butane, iso-butane, n-pentane, iso-pentane or dichlorodifluormethane. The expandable polymer particles can be produced by suspension polymerisation. GB—A—1 469 278 discloses the use, in a process for making foamed thermoplastic copolymer compositions, of a block copolymer wherein one block is e.g. poly-t-butyl styrene. It is known from US—A—3 015 851 that maintaining certain pressure values during different phases of the process is an important feature in the production of expanded shaped articles made from expandable particles of e.g. poly-t-butyl styrene or copolymers thereof. Finally, shaped articles obtained by extrusion foaming of a polymer of t-butyl styrene are known from GB—A—1 198 407.

The known expanded shaped articles, nonetheless, have the drawback that they cannot be used as thermal insulators for piping and the like associated with a relatively high temperature since they are made from homopolymers of styrene or tertiary-butyl styrene or consist of block copolymers, and are further not suitable for applications requiring heat resistant properties.

It is the object of the present invention to provide expanded shaped articles of a heat resistant synthetic resin which can widely be used in various applications necessitating heat resistant properties.

This object was solved by the surprising finding that the heat resistant properties of expanded shaped articles made of a heat resistant synthetic resin can be improved by heating to pre-expand expandable polymer particles containing a volatile foaming agent, the synthetic resin being a copolymer comprising 25 to 75% by weight of tertiary butyl styrene and 75 to 25% by weight of styrene which has been produced by suspension polymerization or by emulsion polymerization, and thereafter heating the resulting pre-expanded polymer particles to thereby form expanded shaped articles of bonded expanded particles.

The subject matter of the present invention are therefore expanded shaped articles of a heat resistant synthetic resin obtained by pre-expanding by a heating medium expandable polymer particles containing 3 to 15% by weight of a volatile foaming agent and heating the resulting pre-expanded polymer particles to thereby form expanded shaped articles of bonded expanded particles, which are characterized in that

(a) the synthetic resin is a copolymer comprising 25 to 75% by weight of tertiary-butyl styrene and 75 to 25% by weight of styrene, which has been produced by suspension polymerization or by emulsion polymerization,

(b) the expandable polymer particles are pre-expanded by the use of steam or a mixture of steam and air as a heating medium under a pressure of 0.1 kg/cm$^2$ G (about 0.1 bar) or more, and

(c) the pre-expanded polymer particles are heated and molded in a closed mold which permits the escape of gases using steam as a heating medium, the maximum pressure at the time of molding of the interior of the shaped articles being 1.0 kg/cm$^2$ G (about 1.0 bar) or more.

The monomeric composition forming the copolymer used in the present invention comprises 25 to 75% by weight of tertiary butyl styrene and 75 to 25% by weight of styrene. In cases where tertiary butyl styrene is less than 25%, an improvement in heat resistant properties sufficient for practical use is not attained. In cases where tertiary butyl styrene is more than 75%, heat resistant properties are quite satisfactory but the expanded shaped articles become rather fragile.

The copolymer particles are produced by suspension polymerization or emulsion polymerization. The monomers may be added at one time when materials are charged into a polymerization vessel, or tertiary butyl styrene may first be polymerized as an initial monomer, then styrene may be added intermittently or at one time at a conversion rate of the initial monomer between 15 to 75% to thereby complete the polymerization. Moreover, as an initial monomer styrene may first be employed and polymerized, tertiary-butyl styrene may then be added intermittently or at one time and the polymerization is thereby completed.

In effecting pre-expansion or heating molding by the use of a heating medium, it is necessary that the polymer particles contain a volatile foaming agent. The incorporation of the volatile foaming agent may be carried out during the course of suspension polymerization or after the termination of suspension polymerization. Further, the foaming agent may be applied to polymer pellets which are obtained by pelletizing a polymer prepared by emulsion polymerization.

As a volatile foaming agent used preferably in the present invention there are included n-butane, iso-butane, n-pentane, iso-pentane, petroleum ether and dichlorodifluoromethane and these are used singly or in combinations of two or more. An additive may further be added for enhancing foaming performance. As preferred additives, there are included heptane, hexane, cyclohexane, dioctyladipate, dioctylphthalate, and dibutylphthalate.

The pre-expansion of expandable polymer particles containing a volatile foaming agent is effected

**0 032 582**

under a steam pressure of 0.1 kg/cm² G (102°C) (about 0.1 bar) or more, while normal expandable polystyrene particles are pre-expanded under a steam pressure of 0 kg/cm² G (0 bar) (100°C). In cases of less than 0.1 kg/cm² G, (about 0.1 bar), no desired expansion rate is obtained. Moreover the molding after the pre-expansion is carried out using a heating medium of steam or mixture steam and air under a maximum pressure at the time of molding of the interior of the shaped articles of 1.0 kg/cm² G (about 1.0 bar) or more. If the pressure is less than 1.0 kg/cm² G, (about 1.0 bar), satisfactory shaped articles are not obtained.

The heating of the pre-expanded polymer particles may be effected by a heating medium such as super-heated steam in a closed mold provided with perforations permitting the escape of gases.

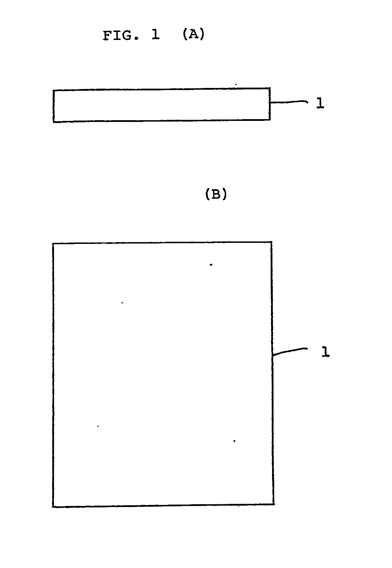

Fig. 1(A) and (B) show the cavity space of a metallic mold having the three dimensions 200 mm×300 mm×20 mm used for "Pearl Star®-90" molding machine manufactured by Toyo Machinery and Metal Co., Ltd. (A) is a side view and (B) is a top plan view.

Hereinafter, the present invention will be explained in more detail by way of examples.

Example 1

Into an autoclave provided with an agitator were charged 110 parts by weight of water, 0.15 part by weight of tricalcium phosphate, 0.006 part by weight of alphaolefine sodium sulfonate, and 0.3 part by weight of sodium chloride. Then, a monomeric mixture consisting of 30 parts by weight of tertiary-butyl styrene and 70 parts by weight of styrene in which 0.3 part by weight of benzoylperoxide, 0.1 part by weight of 1,1 - (tert - butylperoxy) - 3,3,5 - trimethylcyclohexane and 0.7 part by weight of dioctyladipate were dissolved was added with stirring, then dispersed. The obtained mixture was immediately heated up to 90°C and polymerized for 6 hours. After that, 10 parts by weight of butane and 1.8 parts by weight of cyclohexane were added as foaming agent to the mixture, the mixture then being heated up to 110°C. After being maintained at 110°C for 8 hours, the autoclave was cooled to 40°C, and polymer particles named A were obtained after dehydration, drying and sieving.

Those polymer particles having diameters ranging from 710 to 1,000 μm were chosen and expanded at steam pressures of 0 kg/cm² (bar), 0.1 kg/cm² (about 0.1 bar), 0.2 kg/cm² (about 0.2 bar) and 0.5 kg/cm² (about 0.5 bar) respectively, then the expansion rate was measured in the manner described below. The obtained results are shown in Table 1.

The expansion rate was indicated by apparent volume. The apparent volume was measured in that a certain volume of polymer particles was selected in a measuring cylinder and graduations (cm³) of the measuring cylinder per 10 g of the polymer particles were observed.

Example 2

Polymer particles B were prepared in a similar fashion to that of Example 1, except that a monomeric mixture consisting of 50 parts by weight of tertiary-butyl styrene and 50 parts by weight of styrene was employed. The expansion rate was measured similarly to the case of Example 1. Table 1 shows the results.

Example 3

Polymer particles C were produced in a similar manner to that of Example 1, except that a monomeric mixture was employed which consists of 75 parts by weight of tertiary-butyl styrene and 25 parts by weight of styrene. The polymer particles were subjected to measurement of the expansion rate. Table 1 gives the results.

Comparative Example 1

For comparison, polymer particles were prepared in the following prescription and the expansion rate was measured.

Polymer particles D were obtained similarly to the case of Example 1, with the exception that a monomeric mixture consisting of 10 parts by weight of tertiary-butyl styrene and 90 parts by weight of styrene was used. The expansion rate was measured similarly to the case of Example 1. The results obtained are shown in Table 1.

Comparative Example 2

Polymer particles were produced and the expansion rate was measured to compare the results.

With the exception that a monomeric mixture consisting of 100 parts by weight of styrene was used, polymer particles E were obtained in a similar fashion to that of Example 1. The expansion rate was measured similarly to that of Example 1. Table 1 exhibits the results obtained.

Example 4

110 parts by weight of water, 0.15 part by weight of tricalcium phosphate, 0.006 part by weight of alpha-olefine sodium sulfonate and 0.3 part by weight of sodium chloride were charged into an autoclave provided with an agitator. Next, 70 parts by weight of styrene containing 0.21 parts by weight of benzoylperoxide, 0.1 parts by weight of 1,1 - (tertbutylperoxy) - 3,3,5 - trimethylcyclohexane and 0.7 parts by weight of dioctyladipate were added with stirring and dispersed. The mixture obtained was immediately heated up to 90°C to initiate polymerization. At the conversion rate of 40% by weight, 30 parts by weight of

**0 032 582**

tertiary-butyl styrene containing 0.09 parts by weight of benzoylperoxide were added and the polymerization was further continued for 4 hours, thereafter 10 parts by weight of butane and 1.8 parts by weight of cyclohexane were added as foaming agent and then the autoclave was promptly heated up to 110°C. After the autoclave was maintained at 110°C for 8 hours, it was cooled to 40°C and polymer particles H were prepared after dehydration, drying and sieving. The polymer particles F so obtained were subjected to measurement of the expansion rate, the results of which are displayed in Table 1.

TABLE 1

| Examples & Comp. Examples | | Pressure / Time (min) / Polymer particles | Expansion rate (cm³/10 g) | | | | | | | | | | | |
| --- | --- | --- | --- | --- | --- | --- | --- | --- | --- | --- | --- | --- | --- | --- |
| | | | 0 bar | | | 0.1 kg/cm² G about 0.1 bar | | | 0.2 kg/cm² G about 0.2 bar | | | 0.5 kg/cm² G about 0.5 bar | | |
| | | | 1 | 3 | 5 | 1 | 3 | 5 | 1 | 3 | 5 | 1 | 3 | 5 |
| Example | 1 | A | — | 250 | 270 | — | 500 | 700 | — | 700 | 850 | 700 | — | — |
| | 2 | B | — | 130 | 140 | — | 400 | 600 | — | 550 | 700 | 450 | 600 | — |
| | 3 | C | — | — | 100 | — | 300 | 500 | — | 500 | 600 | 400 | 500 | 700 |
| Comp. Example | 1 | D | — | 500 | 700 | — | 800 | — | 600 | — | — | 750 | — | — |
| | 2 | E | — | 650 | 800 | 700 | 900 | — | 780 | — | — | 900 | — | — |
| Example | 4 | F | — | 230 | 250 | — | 450 | 650 | — | 650 | 830 | 670 | — | — |

0 032 582

**0 032 582**

As is self-explanatory from Table 1, expandable polymer particles of the present invention provide pre-expanded particles having a good expansion rate under a steam pressure of 0.1 kg/cm² G about 0.1 bar or more, while providing pre-expanded particles having a low expansion rate under 0 kg/cm² G (0 bar).

Example 5

Polymer particles A to F obtained by Examples 1 to 3, Comparative Examples 1 and 2, and Example 4 were pre-expanded to give pre-expanded particles having 30 and 40 times their original apparent volume. After being stored for 24 hours, the pre-expanded particles were molded using a "Pearl Star®-90" molding machine manufactured by Toyo Machinery and Metal Co., Ltd. A metallic mold of the type used is illustrated in Fig. 1. The molding was carried out under the conditions that both faces heating pressure (i.e. heating pressure from both parts of the mold) was varied from 0.7 kg/cm² (about 0.7 bar) to 0.8 kg/cm² (about 0.8 bar), 1.0 kg/cm² (about 1.0 bar), 1.2 kg/cm² (about 1.2 bar) and 1.4 kg/cm² (about 1.4 bar), while the following values were kept constant: metallic molding heating 7 sec, charging 10 sec, pre-blowing 7 sec, both faces heating 14 sec, auxiliary heating 7.5 sec, one face heating pressure (i.e. heating pressure from one of the twin parts of the mold) 0.5 kg/cm², (about 0.5 bar), water cooling 60 sec, and air cooling 180 sec. "Heating pressure" means the steam pressure at the inlet pipes leading to mold cavity. For the purpose to heat the pre-expanded particles loaded in the cavity, both twin parts of the mold are equipped with steam inlet pipes and small inlet holes on the cavity face.

The shaped articles were subjected to a visual examination as to surface state and inner bonding.

"Inner bonding" signifies the bonding of particles on a broken surface of the shaped articles and is represented by the ratio of the number of particles torn off within the particles per se, not on the boundary faces of the particles, per total number of expanded particles on the broken surface.

In other words, when the shaped articles are broken on the boundary faces of the expanded particles, bonding ratio is zero %, whereas if break takes place on the particles per se, namely, within the particles, bonding ratio is 100%.

The visual examination of surface state was made from the following aspects:

(a) whether the spaces between the expanded particles on the surface of the shaped articles were filled up or not, and

(b) the degree of melting of polymer on the surface of the shaped article.

In the foregoing, the more the spaces are filled up or the less the degree of melting on the surface of the shaped article the better.

The results observed are given in Table 2.

TABLE 2

| Polymer particles | | 0.7 kg/cm² (about 0.7 bar) | | 0.8 kg/cm² (about 0.8 bar) | | 1.0 kg/cm² (about 1.0 bar) | | 1.2 kg/cm² (about 1.2 bar) | | 1.4 kg/cm² (about 1.4 bar) | |
|---|---|---|---|---|---|---|---|---|---|---|---|
| | | Surface state | Inner bonding (%) | Surface state | Inner bonding (%) | Surface state | Inner bonding (%) | Surface state | Inner bonding (%) | Surface state | Inner bonding (%) |
| Examples | A | X | 0 | △∿X | 10 | O | 70 | O∿◎ | 90 | ◎ | 100 |
| | B | X | 0 | X | 0 | O∿△ | 50 | O | 80 | O∿◎ | 100 |
| | C | X | 0 | X | 0 | △ | 50 | O | 80 | O | 90 |
| Comparative Examples | D | △ | 50 | O | 70 | ◎ | 90 | ◎ | 100 | △ | 100 |
| | E | O | 80 | ◎ | 90 | ◎ | 90 | ◎ | 100 | △ | 100 |
| Example | F | X | 0 | △∿X | 10 | O | 60 | O∿◎ | 90 | ◎ | 100 |

Note: Symbols used re surface state mean:
X: Very bad
△: Poor
O: Good
◎: Very good
(The same results were obtained in both cases of 30 and 40 times expansion).

0 032 582

**0 032 582**

Superior shaped articles were obtained, as shown in Table 2 when the expandable polymer particles of the present invention were molded by heating under a steam pressure of 1.0 kg/cm$^2$ G (about 1.0 bar) or more.

Example 6

The heat resistance property was tested for the shaped articles A to F exhibiting good inner bonding among the shaped articles obtained in Example 5.

The heat resistance test was effected using a uniform heating dryer manufactured by Tabai Co., Ltd. in which the shaped articles were heated for 168 hours at 80°C, 85°C, and 90°C respectively and changes (contraction) in the largest dimension (length) before and after heating were measured. The results are given in Table 3.

TABLE 3

| Item | | Contraction ratio after 168 hours (%) | | | | | |
|---|---|---|---|---|---|---|---|
| Temperature (°C) | | 80 | | 85 | | 90 | |
| Polymer particles / Expansion rate (times) | | 30 | 40 | 30 | 40 | 30 | 40 |
| Example | A | 0.5 | 0.7 | 0.7 | 1.0 | 1.7 | 2.0 |
| | B | 0.1 | 0.2 | 0.5 | 0.7 | 1.2 | 1.5 |
| | C | 0.1 | 0.1 | 0.3 | 0.4 | 0.8 | 1.0 |
| Comparative Examples | D | 3 | 4 | 5 | 7 | 10 | 12 |
| | E | 5 | 6 | 6 | 7 | 13 | 15 |
| Example | F | 0.2 | 0.3 | 0.4 | 0.5 | 1.0 | 1.5 |

It is understood from the results of Table 3 that polymer particles A, B, C and F of the present invention exhibit much smaller contraction between 80°C and 90°C than D having a composition outside the scope of the present invention or E, a conventional polystyrene foamed article, in other words, show far superior heat resistance properties.

Example 7

Into an autoclave provided with an agitator, 110 parts by weight of water, 0.15 part by weight of tricalcium phosphate, 0.006 part by weight of alpha-olefine sodium sulfonate and 0.3 part by weight of sodium chloride were charged. Then, a monomeric mixture consisting of 30 parts by weight of tertiary-butyl styrene and 70 parts by weight of styrene containing 0.16 part by weight of benzoylperoxide. and 0.1 part by weight of 1,1 - bis(tert - butylperoxi) - 3,3,5 - trimethylcyclohexane was added with stirring and dispersed. The autoclave was then immediately heated up to 90°C and the polymerization was continued for 6 hours. Then, 8 parts by weight of butane and 1.5 parts by weight of heptane were added as foaming agent, thereafter the autoclave was elevated to 110°C.

The autoclave was cooled to 40°C after being maintained at 110°C for 8 hours and polymer particles G were prepared after dehydration, drying and sieving. The obtained polymer particles having particle diameters between 710 and 1,000 μm were subjected to extrusion foaming at an extrusion temperature of 125°C.

Test samples having 300×200×20 mm were cut from the foamed articles and subjected to heat resistance tests in a similar fashion to that of Example 5. The results obtained were shown in Table 4. The density of samples was 0.10 g/cm$^3$.

Comparative Example 3

Polymer particles H were prepared in a similar fashion to that of the foregoing Example 7, except that a monomer consisting of styrene alone was used.

The polymer particles H thus obtained were extruded at 110°C to give samples, which were tested for heat resistance property similarly to the case of Example 7. Table 4 shows the obtained results. The density of samples was 0.10 g/cm$^3$.

8

TABLE 4

| Test | Contraction ratio after 168 hours (%) | | |
|---|---|---|---|
| Temperature (°C) / Polymer particles | 80 | 85 | 90 |
| G | 0.4 | 0.5 | 1.40 |
| H (comparison) | 5 | 6 | 13 |

The results of Table 4 show clearly that the shaped articles produced by extrusion foaming of the present invention are also by far superior in their heat resistance properties.

**Claims**

1. Expanded shaped articles of a heat resistant synthetic resin obtained by pre-expanding by a heating medium expandable polymer particles containing 3 to 15% by weight of a volatile foaming agent and heating the resulting pre-expanded polymer particles to thereby form expanded shaped articles of bonded expanded particles, characterized in that

(a) the synthetic resin is a copolymer comprising 25 to 75% by weight of tertiary-butyl styrene and 75 to 25% by weight of styrene, which has been produced by suspension polymerization or by emulsion polymerization,

(b) the expandable polymer particles are pre-expanded by the use of steam or a mixture of steam and air as a heating medium under a pressure of 0.1 $kg/cm^2$ G (about 0.1 bar) or more, and

(c) the pre-expanded polymer particles are heated and molded in a closed mold which permits the escape of gases using steam as a heating medium, the maximum pressure at the time of molding of the interior of the shaped articles being 1.0 $kg/cm^2$ G (about 1.0 bar) or more.

2. Expanded shaped articles of claim 1, wherein the volatile foaming agent is at least one selected from the group consisting of n-butane, iso-butane, n-pentane, iso-pentane, petroleum ether and dichlorodifluoromethane.

3. Expanded shapes articles of any of Claims 1 or 2, wherein the expandable polymer particles are produced by suspension polymerization.

4. Expanded shaped articles of any of Claims 1 to 3, wherein the expandable polymer particles are pellets of a polymer produced by emulsion polymerization, pelleted by an extrusion pelletizer, the pellets containing a foaming agent.

5. Expanded shaped articles of any of Claims 1 to 4, wherein the polymer is produced by suspension polymerization or emulsion polymerization in which 25 to 75% by weight of tertiary-butyl styrene are polymerized as an initial monomer, then 75 to 25% by weight of styrene is added intermittently or at one time at a conversion rate of the initial monomer between 15 and 75%, polymerization thereafter thus being completed.

6. Expanded shaped articles of any of Claims 1 to 4, wherein the polymer is produced by suspension polymerization or emulsion polymerization in which 75 to 25% by weight of styrene is polymerized as an initial monomer, then 25 to 75% by weight of tertiary-butyl styrene are added intermittently or at one time at a conversion rate of the initial monomer between 15 and 75%, polymerization thereafter thus being completed.

**Patentansprüche**

1. Expandierte Formkörper aus einem hitzebeständigen Kunstharz, erhalten durch Vorexpandieren mit einem Heizmedium von expandierbaren Polymerisat-Teilchen, die 3 bis 15 Gewichtsprozent eines flüchtigen Treibmittels enthalten, und Erhitzen der erhaltenen vorexpandierten Polymerisat-Teilchen, um dadurch expandierte Formkörper aus gebundenen expandierten Teilchen zu erzeugen, dadurch gekennzeichnet, daß

a) das Kunstharz ein 25 bis 75 Gewichtsprozent tert.-Butylstyrol und 75 bis 25 Gewichtsprozent Styrol umfassendes Copolymerisat ist, das durch Suspensionspolymerisation oder durch Emulsionspolymerisation erzeugt worden ist,

b) die expandierbaren Polymerisat-Teilchen unter Verwendung von Dampf oder eines Gemisches aus Dampf und Luft als Heizmedium unter einem Druck von mindestens 0,1 $kg/cm^2$ G (etwa 0,1 bar) vorexpandiert wurden, und

c) die vorexpandierten Polymerisat-Teilchen in einer geschlossenen Form erhitzt und geformt werden, die das Entweichen von Gasen ermöglicht, wobei Dampf als Heizmedium verwendet wird, und wobei der maximale Druck zur Zeit des Formens im Inneren der Formkörper mindestens 1,0 kg/cm² G (etwa 1,0 bar) beträgt.

2. Expandierte Formkörper nach Anspruch 1, wobei das flüchtige Treibmittel mindestens einer der Stoffe n-Butan, Iso-butan, n-Pentan, Iso-pentan, Petroläther und Dichlordifluormethan ist.

3. Expandierte Formkörper nach einem der Ansprüche 1 oder 2, wobei die expandierbaren Polymerisat-Teilchen durch Suspensionspolymerisation erzeugt werden.

4. Expandierte Formkörper nach einem der Ansprüche 1 bis 3, wobei die expandierbaren Polymerisat-Teilchen Pellets aus einem durch Emulsionspolymerisation erzeugten Polymerisat sind, die durch ein Extrusions-Pelletisiergerät pelletisiert wurden, wobei die Pellets ein Treibmittel enthalten.

5. Expandierte Formkörper nach einem der Ansprüche 1 bis 4, wobei das Polymerisat durch Suspensionspolymerisation oder Emulsionspolymerisation erzeugt wurde, wobei 25 bis 75 Gewichtsprozent tert.-Butylstyrol als Ausgangsmonomer polymerisiert werden, dann absatzweise oder auf einmal bei einer Umwandlungsrate des Ausgangsmonomeren zwischen 15 und 75% 75 bis 25 Gewichtsprozent Styrol zugegeben werden und die Polymerisation danach abgeschlossen wird.

6. Expandierte Formkörper nach einem der Ansprüche 1 bis 4, wobei das Polymerisat durch Suspensionspolymerisation oder Emulsionspolymerisation erzeugt wurde, wobei 75 bis 25 Gewichtsprozent Styrol als Ausgangsmonomer polymerisiert werden, dann absatzweise oder auf einmal bei einer Umwandlungsrate des Ausgangsmonomeren zwischen 15 und 75% 25 bis 75 Gewichtsprozent tert.-Butylstyrol zugegeben werden und die Polymerisation danach abgeschlossen wird.

**Revendications**

1. Articles façonnés expansés en résine synthétique résistant à la chaleur obtenus en expansant préalablement par un milieu de chauffage des particules de polymère expansi bles contenant 3 à 15% en poids d'un agent moussant volatil et en chauffant les particules de polymère préexpansées résultantes de manière à former ainsi des articles façonnés expansés de particules expansées liées, caractérisés en ce que

a) la résine synthétique est un copolymère comprenant 25 à 75% en poids de styrène butylique tertiaire et 75 à 25% en poids de styrène, qui a été obtenu par une polymérisation en suspension ou par une polymérisation en émulsion,

b) les particules de polymère expansibles sont préalablement expansées par l'utilisation de vapeur d'eau ou d'un mélange de vapeur d'eau et d'air comme moyen de chauffage sous une pression de 0,1 kg/cm² G (environ 0,1 bar) ou plus, et

c) les particules de polymère préalablement expansées sont chauffées et moulées dans un moule fermé qui permet l'échappement de gaz en utilisant la vapeur d'eau comme moyen de chauffage, la pression maximale au moment du moulage de l'intérieur des articles façonnés étant de 1,0 kg/cm² G (environ 1,0 bar) ou plus.

2. Articles façonnés expansés suivant la revendication 1, caractérisés en ce que l'agent moussant volatil est au moins un agent choisi dans le groupe comprenant le n-butane, l'isobutane, le n-pentane, l'isopentane, l'éther de pétrole et le dichlorodifluorométhane.

3. Articles façonnés expansés suivant l'une ou l'autre des revendications 1 et 2, caractérisés en ce que les particules de polymère expansibles sont obtenues par une polymérisation en suspension.

4. Articles façonnés expansés suivant l'une quelconque des revendications 1 à 3, caractérisés en ce que les particules de polymère expansibles sont des boulettes d'un polymère produit par une polymérisation en émulsion, réduit en boulettes par une machine à réduire la gomme en boulettes par extrusion, les boulettes contenant un agent moussant.

5. Articles façonnés expansés suivant l'une quelconque des revendications 1 à 4, caractérisés en ce que l'on obtient le polymère par une polymérisation en suspension ou par une polymérisation en émulsion dans laquelle 25 à 75% en poids de styrène butylique tertiaire sont polymérisés comme monomère initial, et en ce que l'on ajoute ensuite 75 à 25% en poids de styrène par intermittence ou à un moment donné à un taux de conversion du monomère initial se situant entre 15 et 75%, la polymérisation étant ensuite ainsi achevée.

6. Articles façonnés expansés suivant l'une quelconque des revendications 1 à 4, caractérisés en ce que l'on produit le polymère par une polymérisation en suspension ou par une polymérisation en émulsion dans laquelle 75 à 25% en poids de styrène sont polymérisés comme monomère initial, et en ce que l'on ajoute ensuite 25 à 75% en poids de styrène butylique tertiaire par intermittence ou à un moment donné à un taux de conversion du monomère initial se situant entre 15 et 75%, la polymérisation étant ensuite ainsi achevée.

FIG. 1   (A)

1

(B)

1